# EUROPEAN PATENT APPLICATION

(11) **EP 4 502 269 A1**
(43) Date of publication of application: **05.02.2025**
(21) Application number: 22933156.6
(22) Date of filing: 09.12.2022
(51) Int. Cl.: D06P 1/81, D06P 1/94, D06P 1/16, D06P 1/647, D06P 1/649, D06P 1/651, D06P 1/653

(54) **SUPERCRITICAL CARBON DIOXIDE FLUID DYEING METHOD FEATURING HIGH DYE UPTAKE OF DISPERSE DYE**

(30) Priority: 25.03.2022 CN 202210307169
(71) Applicant: Qingdao Jifa Group Co., Ltd, Jimo Qingdao, Shandong 266200 (CN); Donghua University, Shanghai 201620 (CN)
(72) Inventor: MAO, Zhiping, Shanghai 201620 (CN); WU, Wei, Shanghai 201620 (CN); GE, Huaifu, Shanghai 201620 (CN); XU, Hong, Shanghai 201620 (CN); ZHONG, Yi, Shanghai 201620 (CN); YANG, Weidong, Qingdao Shandong 266200 (CN); WANG, Jian, Qingdao Shandong 266200 (CN); WAN, Gang, Qingdao Shandong 266200 (CN); GUO, Kun, Qingdao Shandong 266200 (CN); LIN, Dapeng, Qingdao Shandong 266200 (CN); WANG, Dawei, Qingdao Shandong 266200 (CN)
(74) Representative: Franks & Co Limited
(86) International application number: PCT/CN2022/138068
(87) International publication number: WO 2023/179106

(57) **Abstract**

A supercritical carbon dioxide fluid dyeing method with a high dye-uptake of disperse dyes is provided, when using disperse dyes to dye polyester fiber or products thereof, adding a co-solvent capable of increasing the dissolution rate and solubility of the disperse dye in the supercritical carbon dioxide fluid into the dyeing system, wherein the solubility of the co-solvent in the supercritical carbon dioxide fluid is higher than that of said disperse dye, and in the dyeing system, the intermolecular interaction between each substance meets the requirement of: the intermolecular interaction between the co-solvent and the supercritical carbon dioxide fluid > the intermolecular interaction between the co-solvent and said disperse dye > the intermolecular interaction between the supercritical carbon dioxide fluid and said disperse dye; wherein the co-solvent is solid at a separation temperature of 30-50 °C and a separation pressure of 5-6 MPa; the co-solvent used in the present invention can significantly improve the dye-uptake of disperse dyes on polyester fibers, and can also be separated from CO₂ and reuse CO₂.

## Description

### TECHNICAL FIELD

The present invention belongs to the technical field of dyeing and finishing, and more particularly, relates to a supercritical carbon dioxide fluid dyeing method with a high dye-uptake of disperse dyes.

### BACKGROUND

Polyester fiber supercritical carbon dioxide fluid waterless dyeing technology uses carbon dioxide fluid in a supercritical state to replace water in the traditional printing and dyeing process as the dyeing medium. In supercritical carbon dioxide fluid dyeing technology, carbon dioxide can be reused, there is no need to add other dyeing co-solvents, there is no sewage discharge, and the levelness and dyeing reproducibility are good. No drying process is required, and the dyeing time is short compared to traditional methods , saving energy.

CO₂ is a linear non-polar molecule with good solubility for weakly polar disperse dyes. It has a good plasticizing effect on polyester fibers under high temperature and high pressure conditions. Therefore, supercritical carbon dioxide fluid dyeing technology is very suitable for disperse dyes dyeing system for dyeing polyester fibers. However, in actual production, some disperse dyes have a problem of low dye-uptake in supercritical carbon dioxide fluid dyeing. At present, there are two main methods to improve the dye-uptake in supercritical carbon dioxide fluid dyeing: one is to add a small amount of acetone, ethanol and other co-solvents to the supercritical carbon dioxide fluid during dyeing, but these co-solvents are easy to volatilize and cannot be effectively used. Separation from supercritical carbon dioxide results in low purity of recovered carbon dioxide and cannot be reused; the second is to develop new dyes suitable for dyeing supercritical carbon dioxide fluids, but the development of new dyes is difficult, costly and takes a long time.

Therefore, it is of great significance to find a simple method to improve the dye-uptake of disperse dyes in the supercritical carbon dioxide fluid without the above-mentioned defects.

### SUMMARY

In order to solve the problems in the prior art, the present invention provides a supercritical carbon dioxide fluid dyeing method with a high dye-uptake of disperse dyes.

To this end, the technical schemes of the invention are as follows:
A supercritical carbon dioxide fluid dyeing method with a high dye-uptake of disperse dyes, when using a disperse dye to dye a polyester fiber or products thereof, adding a co-solvent capable of increasing a dissolution rate and a solubility of the disperse dye in a supercritical carbon dioxide fluid into a dyeing system, comprising:
wherein the solubility of the co-solvent in the supercritical carbon dioxide fluid is higher than that of the disperse dye, and in the dyeing system, an intermolecular interaction between each substance meets the requirement of: the intermolecular interaction between the co-solvent and the supercritical carbon dioxide fluid> the intermolecular interaction between the co-solvent and the disperse dye > the intermolecular interaction between the supercritical carbon dioxide fluid and the disperse dye;
in the process of wrapping the disperse dyes with the supercritical carbon dioxide fluid, the present invention makes the dyeing system contain a co-solvent, and since the solubility of the selected co-solvent in the supercritical carbon dioxide fluid is higher than that of the disperse dye, the co-solvent can quickly dissolve in the supercritical carbon dioxide fluid. Furthermore, the co-solvent used in the present invention and the disperse dye can form intermolecular interactions (mainly π-π stacking). These intermolecular interactions are strong, that is, when the co-solvent contains co-solvent in the dyeing system of solvents, disperse dyes and supercritical carbon dioxide fluids, the intermolecular interaction between the co-solvent and the supercritical carbon dioxide fluid> the intermolecular interaction between the co-solvent and the disperse dye > the intermolecular interaction between the supercritical carbon dioxide fluid and the disperse dye, so that the intermolecular interaction between the disperse dyes enables the disperse dyes to quickly combine with the co-solvent after being dissolved in the supercritical carbon dioxide fluid, which also greatly increases the solubility of the disperse dyes in the supercritical carbon dioxide fluid; and when the content of the co-solvent is sufficiently large, the combination process of the disperse dye and the co-solvent will be more obvious, and the dissolution rate and solubility of the disperse dye in the supercritical carbon dioxide fluid will also be more obvious;
wherein the co-solvent is solid at a separation temperature of 30-50 °C and a separation pressure of 5-6 MPa; the separation temperature is a temperature when a supercritical carbon dioxide gasification is achieved and dissolved dyes and co-solvents are precipitated; the separation pressure is a pressure when a supercritical carbon dioxide gasification is achieved and dissolved dyes and co-solvents are precipitated; the prior art using acetone, ethanol, etc. as co-solvent has the problem of difficulty in separation, making it difficult to reuse CO₂; because the co-solvent in the present invention is a solid at the separation temperature and pressure, after the supercritical carbon dioxide fluid dyeing process is completed, the supercritical carbon dioxide fluid dyeing medium can be separated through a conventional separation kettle; during the separation process, the separation kettle is a low-pressure area, and the pressure of the carbon dioxide decreases when reaching the separation kettle, carbon dioxide changes from supercritical state to gaseous state, and dyes and co-solvents are precipitated; if co-solvents such as acetone and ethanol are used, co-solvents such as acetone and ethanol are extremely volatile at the separation temperature and pressure and are not easily separated from the carbon dioxide;
wherein the high dye-uptake of disperse dyes means that the dye-uptake of disperse dyes is 90.18% - 99.97%;
wherein the supercritical carbon dioxide fluid dyeing method with a high dye-uptake of disperse dyes has an increase in dye-uptake of 123% - 194.7% compared to the comparative method, and comparing the comparison method and the supercritical carbon dioxide fluid dyeing method with high dye-uptake of disperse dyes, the only difference is that it does not use the co-solvent.

The following preferred technology program is presented to give a detailed description for this invention:
The said supercritical carbon dioxide fluid dyeing method with a high dye-uptake of disperse dyes, in the dyeing system, a binding force between the disperse dye and the polyester fiber or products thereof is greater than a binding force between the disperse dye and other substances, a binding force between the co-solvent and the supercritical carbon dioxide fluid is greater than a binding force between the co-solvent and other substances;
in a dyeing kettle containing co-solvent, disperse dye, supercritical carbon dioxide fluid and polyester fiber or products thereof, due to the poor molecular polarity of the polyester fiber or products thereof, the polarity of the disperse dye is closer to the polarity of the polyester fiber or products thereof, and according to the principle of similar miscibility, disperse dyes are easier to combine with polyester fibers or products thereof, while co-solvents are easier to combine with supercritical carbon dioxide fluids than polyester fibers or products thereof. That is, in the dyeing system containing co-solvent, disperse dye, supercritical carbon dioxide fluid and polyester fiber or products thereof, the binding force between disperse dyes and polyester fibers or products thereof is greater than the binding force between disperse dyes and other substances (co-solvents, supercritical carbon dioxide fluids), the binding force between the co-solvent and the supercritical carbon dioxide fluid is greater than the binding force between the co-solvent and other substances (disperse dyes, polyester fibers or products thereof). Therefore, the supercritical fluid containing a large amount of disperse dyes and co-solvents is dissolved. When the critical carbon dioxide fluid comes into contact with polyester fiber or products thereof, the disperse dyes continue to adsorb and diffuse into the polyester fiber or products thereof, while the co-solvent still remains in the supercritical carbon dioxide fluid and will not interact with the polyester fiber or products thereof, that is, in the dyeing kettle, the disperse dye in the dyeing medium is continuously consumed, but the co-solvent is not consumed;
since the co-solvent dissolved in the supercritical carbon dioxide fluid will not be consumed in the dyeing kettle, when the next cycle of supercritical carbon dioxide fluid passes through the dye kettle where the disperse dye is located, the co-solvent can still improve the quality of the disperse dye. The effect of dissolution rate and solubility in supercritical carbon dioxide fluid ensures that the concentration of disperse dyes in supercritical carbon dioxide fluid in each cycle is significantly higher than that of the prior art. When passing through polyester fibers or products thereof, the disperse dyes and fibers are larger, the amount of dye bound to the fiber with affinity is greater, and the dye-uptake is improved within the specified dyeing time.

The said supercritical carbon dioxide fluid dyeing method with a high dye-uptake of disperse dyes, wherein the co-solvent is more than one selected from the group consisting of benzoic acid (with a solubility of 5.7 g/L, a dissolution rate of 1.14 g/(L·min)), nicotinamide (with a solubility of 3.2 g/L, a dissolution rate of 0.64 g/(L·min)), methyl para-aminobenzoate (with a solubility of 2.5 g/L, a dissolution rate of 0.24 g/(L·min)), methyl para-hydroxybenzoate (with a solubility of 2.3 g/L, a dissolution rate of 0.21 g/(L·min)), methyl L-complexinate (with a solubility of 1.5 g/L, a dissolution rate of 0.14 g/(L·min)) and methyl L-tryptophan (with a solubility of 1.2 g/L, a dissolution rate of 0.28 g/(L·min));
wherein the disperse dye is disperse yellow 163 (with a solubility of 2.12*10⁻³ g/L, a dissolution rate of 1.4*10⁻⁴ g/(L·min)), disperse blue 60 (with a solubility of 4.56*10⁻³ g/L, a dissolution rate of 2.17*10⁻⁴ g/(L·min)), disperse orange 44 (with a solubility of 2.56*10⁻³ g/L, a dissolution rate of 2.13*10⁻⁴ g/(L·min)), disperse orange 30:2 (with a solubility of 7.59*10⁻⁴ g/L, a dissolution rate of 5.06*10⁻⁵ g/(L·min)), disperse red 19 (with a solubility of 3.56*10⁻³ g/L, a dissolution rate of 7.12*10⁻⁴ g/(L·min)), disperse blue 104 (with a solubility of 4.12*10⁻³ g/L, a dissolution rate of 1.87*10⁻⁴ g/(L·min)) or disperse violet 26 (with a solubility of 2.38*10⁻³ g/L, a dissolution rate of 1.32*10⁻⁴ g/(L·min));
wherein test conditions for solubility and dissolution rate in the above two paragraphs are all 130 °C and 27 MPa, and the solvents used are supercritical carbon dioxide fluids.

The said supercritical carbon dioxide fluid dyeing method with a high dye-uptake of disperse dyes, the specific steps as follows:
(1) making disperse dyes and co-solvents into powders respectively;
(2) blending a powdered disperse dye and co-solvent in a certain molar ratio to obtain a mixture;
(3) placing a ground mixture in a dye kettle, and at the same time placing the polyester fiber or products thereof in the dye kettle, passing in the carbon dioxide liquid, adjusting the temperature and pressure in the dye kettle for a high-temperature and high-pressure dyeing, and taking out the polyester fiber or products thereof after the dyeing is completed.

The said supercritical carbon dioxide fluid dyeing method with a high dye-uptake of disperse dyes, in step (1), the molar ratio of disperse dyes and co-solvents is 1:(1-10).

The said supercritical carbon dioxide fluid dyeing method with a high dye-uptake of disperse dyes, in step (2), the blending is using a method of evaporation crystallization, dry grinding, wet grinding, hot melt extrusion or melt crystallization.

The said supercritical carbon dioxide fluid dyeing method with a high dye-uptake of disperse dyes, in step (3), the high-temperature and high-pressure dyeing is at a temperature of 100-150 °C and a pressure of 16-30 MPa.

Benefits:
(1) The supercritical carbon dioxide fluid dyeing method with a high dye-uptake of disperse dyes, the co-solvent used is environmentally friendly and will not cause potential safety hazards to operators;
(2) The supercritical carbon dioxide fluid dyeing method with a high dye-uptake of disperse dyes, the co-solvent used can significantly improve the dye-uptake of disperse dyes on polyester fibers and products thereof, and at the same time, the carbon dioxide fluid is easy to mix with the co-solvent and dye are separated, making the carbon dioxide liquid reusable, greatly simplifying the dyeing method and cost.

### DETAILED DESCRIPTION OF THE EMBODIMENTS

Based on above mentioned method, the following embodiments are carried out for further demonstration in the present invention. It is to be understood that these embodiments are only intended to illustrate the invention and are not intended to limit the scope of the invention. In addition, it should be understood that after reading the contents described in the present invention, those technical personnel in this field can make various changes or modifications to the invention, and these equivalent forms also fall within the scope of the claims attached to the application.

### Example 1

A supercritical carbon dioxide fluid dyeing method with a high dye-uptake of disperse dyes, uses a supercritical carbon dioxide water-free dyeing equipment for dyeing, and the specific steps are as follows:
(1) preparing disperse yellow 163 (filter cake, purchased from Zhejiang Runtu Co., Ltd.) and benzoic acid into powders that are evenly dispersed and have no obvious large particles;
(2) weighing the powdered disperse yellow 163 and benzoic acid at a molar ratio of 1:3, and dry grinding the weighed disperse uellow 163 and benzoic acid, the dry grinding method uses zirconia beads, and the addition amount of zirconia beads is 10 times the total mass of disperse yellow 163 and benzoic acid, the ball milling speed is 200 r/min, the powder with a fineness of 100 mesh is obtained after grinding, and the powder is composed of disperse yellow 163 and benzoic acid;
(3) weighing a certain amount of the powder prepared in step (2) and placing it in the dye kettle, and placing the 75D/48F cheese yarn (the yarn is made of polyester fiber) into the dye kettle, and closing the lids of the dye kettle and the dyeing kettle; wherein the ratio of the mass of the polyester fiber on the cheese to the mass of the dye in the mixture prepared in step (2) is 100:1 ;
(4) opening the valves of the booster pump and carbon dioxide storage tank, introducing carbon dioxide liquid into the dye kettle, and opening the circulation pump, setting the carbon dioxide circulation rate to 30 seconds/time, and at the same time, monitoring the dyeing system formed by the entire supercritical carbon dioxide anhydrous dyeing equipment, the heating rate is 1 °C/min; using a flow meter to determine the amount of carbon dioxide liquid introduced, when the ratio of the volume of carbon dioxide liquid to the mass of yarn on the cheese yarn reaches 1 L:60g, closing the valve of the carbon dioxide storage tank and the booster pump; continuing to heat up the dye kettle and dyeing kettle to 130 °C at a heating rate of 1°C/min, and controlling the pressure of the dye kettle and dyeing kettle to be 27 MPa; under the conditions of 130 °C and 27 MPa, the carbon dioxide is supercritical fluid state, and keep the circulation rate of the supercritical carbon dioxide fluid at 30 seconds/time and perform supercritical carbon dioxide anhydrous dyeing for 2 hours, and the dyeing is completed.

After dyeing, the supercritical carbon dioxide fluid flows through the low-pressure zone of the separation kettle with a temperature of 30-50 °C and a pressure of 5-6 MPa and becomes gas, disperse yellow 163 and benzoic acid are precipitated, and the pure carbon dioxide gas is then treated at low temperature and turned into a liquid back into the storage tank, and the carbon dioxide recovery rate is 100%.

Open the lids of the dye kettle and the dyeing kettle, take out the cheese yarn, and measure the inner, middle and outer layers of the cheese yarn (i.e. cheese yarn) according to GBIT 9337-2009 "Method For Determination of High-temperature Dye-uptake of Disperse Dyes". The dye uptake amount of the thread is averaged to calculate the dye-uptake. The dye-uptake of disperse yellow 163 is 92.17%.

The comparison method is basically the same as the above method, and the only difference is that benzoic acid is not added to the dye kettle. After the dyeing is completed, open the lids of the dye kettle and the dyeing kettle, and take out the cheese yarn. The dye-uptake of disperse yellow 163 is 33.67%.

### Example 2

A supercritical carbon dioxide fluid dyeing method with a high dye-uptake of disperse dyes, the specific process is basically the same as in Example 1. The only difference is that after closing the valve and booster pump of the carbon dioxide storage tank, the temperature continues to increase at 1°C/min. Heat both the dye kettle and the dyeing kettle to 120 °C, and control the pressure of the dye kettle and the dyeing kettle to 26 MPa, and dye under the conditions of 120 °C and 26 MPa.

After testing, the dye-uptake of disperse yellow 163 is 90.18%.

The comparison method is basically the same as the above method. The only difference is that benzoic acid is not added to the dye kettle. After the dyeing is completed, open the lids of the dye kettle and the dyeing kettle, and take out the cheese yarn. The dye-uptake of disperse yellow 163 is 31.52%.

### Example 3

A supercritical carbon dioxide fluid dyeing method with a high dye-uptake of disperse dyes, the specific process is basically the same as in Example 1. The only difference is that after closing the valve and booster pump of the carbon dioxide storage tank, the temperature continues to increase at 1°C/min. Heat both the dye kettle and the dyeing kettle to 140 °C, and control the pressure of the dye kettle and the dyeing kettle to 28 MPa. Dyeing is carried out under the conditions of 140 °C and 28 MPa.

After testing, the dye-uptake of disperse yellow 163 is 93.15%.

The comparison method is basically the same as the above method. The only difference is that benzoic acid is not added to the dye kettle. After the dyeing is completed, open the lids of the dye kettle and the dyeing kettle, and take out the cheese yarn. The dye-uptake of disperse yellow 163 is 34.53%.

### Example 4

A supercritical carbon dioxide fluid dyeing method with a high dye-uptake of disperse dyes, the specific process is basically the same as in Example 1. The only difference is that after closing the valve and booster pump of the carbon dioxide storage tank, the temperature continues to increase at 1°C/min. Heat both the dye kettle and the dyeing kettle to 150 °C, and control the pressure of the dye kettle and the dyeing kettle to 29 MPa, and dye under the conditions of 150 °C and 29 MPa.

After testing, the dye-uptake of disperse yellow 163 is 93.96%.

The comparison method is basically the same as the above method. The only difference is that benzoic acid is not added to the dye kettle. After the dyeing is completed, open the lids of the dye kettle and the dyeing kettle, and take out the cheese yarn. The dye-uptake of disperse yellow 163 is 34.69%.

### Example 5

A supercritical carbon dioxide fluid dyeing method with a high dye-uptake of disperse dyes, the specific process is basically the same as in Example 1. The only difference is that disperse yellow 163 is replaced with disperse blue 60 (filter cake, Zhejiang Runtu Co., Ltd.), replace benzoic acid with nicotinamide, and replace the molar ratio of 1:3 in step (2) with the molar ratio of 1:2.

After testing, the dye-uptake of disperse blue 60 is 92.55%;

Nicotinamide is not added to the dye kettle. After the dyeing is completed, open the lids of the dye kettle and the dyeing kettle, and take out the cheese yarn. The dye-uptake of disperse blue 60 is 40.78%.

### Example 6

A supercritical carbon dioxide fluid dyeing method with a high dye-uptake of disperse dyes, the specific process is basically the same as that in Example 5. The only difference is that the molar ratio of 1:2 in step (2) is replaced by a molar ratio of 1:4; after testing, the dye-uptake of disperse blue 60 is 95.57%.

Nicotinamide is not added to the dye kettle. After the dyeing is completed, open the lids of the dye kettle and the dyeing kettle, and take out the cheese yarn. The dye-uptake of disperse blue 60 is 40.78%.

### Example 7

A supercritical carbon dioxide fluid dyeing method with a high dye-uptake of disperse dyes, the specific process is basically the same as that in Example 5. The only difference is that the molar ratio of 1:2 in step (2) is replaced by a molar ratio of 1:6; after testing, the dye-uptake of disperse blue 60 is 98.69%.

Nicotinamide is not added to the dye kettle. After the dyeing is completed, open the lids of the dye kettle and the dyeing kettle, and take out the cheese yarn. The dye-uptake of disperse blue 60 is 40.78%.

### Example 8

A supercritical carbon dioxide fluid dyeing method with a high dye-uptake of disperse dyes, the specific process is basically the same as that in Example 5. The only difference is that the molar ratio of 1:2 in step (2) is replaced by a molar ratio of 1:8; after testing, the dye-uptake of disperse blue 60 is 99.52%.

Nicotinamide is not added to the dye kettle. After the dyeing is completed, open the lids of the dye kettle and the dyeing kettle, and take out the cheese yarn. The dye-uptake of disperse blue 60 is 40.78%.

### Example 9

A supercritical carbon dioxide fluid dyeing method with a high dye-uptake of disperse dyes, the specific process is basically the same as that in Example 5. The only difference is that the molar ratio of 1:2 in step (2) is replaced by a molar ratio of 1:10; after testing, the dye-uptake of disperse blue 60 is 99.97%.

Nicotinamide is not added to the dye kettle. After the dyeing is completed, open the lids of the dye kettle and the dyeing kettle, and take out the cheese yarn. The dye-uptake of disperse blue 60 is 40.78%.

### Example 10

A supercritical carbon dioxide fluid dyeing method with a high dye-uptake of disperse dyes, the specific process is basically the same as that of Example 1. The only difference is that the process of step (2) is replaced with: powdered disperse yellow 163 and benzoic acid. Dissolve and disperse in acetone, evaporate and crystallize at normal temperature and pressure to obtain a mixture, then grind it; after grinding, obtain a powder with a fineness of 100 mesh; among them, the molar ratio of disperse yellow 163 and benzoic acid is 1:3, and the molar ratio of disperse yellow 163 and benzoic acid is 1:3. The ratio of the total mass to the volume of acetone is 1g:50mL; and after testing, the dye-uptake of disperse yellow 163 is 92.56%.

The comparison method is basically the same as the above method. The only difference is that benzoic acid is not added to the dye kettle. After the dyeing is completed, open the lids of the dye kettle and the dyeing kettle, and take out the cheese yarn. The dye-uptake of disperse yellow 163 is 33.67%.

### Example 11

A supercritical carbon dioxide fluid dyeing method with a high dye-uptake of disperse dyes, the specific process is basically the same as that of Example 1. The only difference is that the process of step (2) is replaced with (2) powdered disperse yellow 163. Weigh benzoic acid and benzoic acid at a molar ratio of 1:3, and wet-grind the weighed blend. During the grinding process, add ethanol according to the ratio of the mass of the blend to ethanol 1g:100µL. Grinding while adding. After grinding, a powder with a fineness of 100 mesh is obtained; after testing, the dye-uptake of disperse yellow 163 is 92.89%.

The comparison method is basically the same as the above method. The only difference is that benzoic acid is not added to the dye kettle. After the dyeing is completed, open the lids of the dye kettle and the dyeing kettle, and take out the cheese yarn. The dye-uptake of disperse yellow 163 is 31.52%.

### Example 12

A supercritical carbon dioxide fluid dyeing method with a high dye-uptake of disperse dyes, uses supercritical carbon dioxide water-free dyeing equipment for dyeing. The specific steps are as follows:
(1) preparing disperse yellow 163 (filter cake, purchased from Zhejiang Runtu Co., Ltd.) and nicotinamide into powders that are evenly dispersed and have no obvious large particles;
(2) weighing the powdered disperse yellow 163 and nicotinamide at a molar ratio of 1:3, and blending the weighed blend using a twin-screw extrusion method. The blending temperature is 200°C and the blending time is 1 minute, the screw speed is 60r/min. The product is ground, and after grinding, a powder with a fineness of 100 mesh is obtained. The powder is composed of disperse yellow 163 and nicotinamide;
(3) weighing a certain amount of the powder prepared in step (2) and placing it in the dye kettle, and placing the 75D/48F cheese yarn (the yarn is made of polyester fiber) into the dye kettle, and closing the lids of the dye kettle and the dyeing kettle; wherein the ratio of the mass of the polyester fiber on the cheese to the mass of the dye in the mixture prepared in step (2) is 100:1;
(4) opening the valves of the booster pump and carbon dioxide storage tank, introducing carbon dioxide liquid into the dye kettle, and opening the circulation pump, setting the carbon dioxide circulation rate to 30 seconds/time, and at the same time, monitoring the dyeing system formed by the entire supercritical carbon dioxide anhydrous dyeing equipment, the heating rate is 1 °C/min; using a flow meter to determine the amount of carbon dioxide liquid introduced, when the ratio of the volume of carbon dioxide liquid to the mass of yarn on the cheese yarn reaches 1 L:60g, closing the valve of the carbon dioxide storage tank and the booster pump; continuing to heat up the dye kettle and dyeing kettle to 130 °C at a heating rate of 1°C/min, and controlling the pressure of the dye kettle and dyeing kettle to be 27 MPa; under the conditions of 130 °C and 27 MPa, the carbon dioxide is supercritical fluid state, and keep the circulation rate of the supercritical carbon dioxide fluid at 30 seconds/time and perform supercritical carbon dioxide anhydrous dyeing for 2 hours, and the dyeing is completed.

After dyeing, the supercritical carbon dioxide fluid flows through the low-pressure zone of the separation kettle with a temperature of 30-50 °C and a pressure of 5-6 MPa and becomes gas, disperse yellow 163 and nicotinamide are precipitated, and the pure carbon dioxide gas is then treated at low temperature and turned into a liquid back into the storage tank, and the carbon dioxide recovery rate is 100%.

Open the lids of the dye kettle and the dyeing kettle, take out the cheese yarn, and after analysis, the dye-uptake of disperse yellow 163 is 92.35%.

The comparison method is basically the same as the above method, and the only difference is that nicotinamide is not added to the dye kettle. After the dyeing is completed, open the lids of the dye kettle and the dyeing kettle, and take out the cheese yarn. The dye-uptake of disperse yellow 163 is 33.67%.

### Example 13

A supercritical carbon dioxide fluid dyeing method with a high dye-uptake of disperse dyes, the specific process is basically the same as in Example 12. The only difference is that the process of step (2) is replaced with: powdered disperse yellow 163 and nicotinamide weigh according to the molar ratio of 1:3, melt and blend the weighed blend at 200°C for 5 minutes, then cool and crystallize, and grind to obtain a powder with a fineness of 100 mesh; and after testing, it is found that the rate of the dyeing of disperse yellow 163 is 92.21%.

The comparison method is basically the same as the above method. The only difference is that benzoic acid is not added to the dye kettle. After the dyeing is completed, open the lids of the dye kettle and the dyeing kettle, and take out the cheese yarn. The dye-uptake of disperse yellow 163 is 34.69%.

### Example 14

A supercritical carbon dioxide fluid dyeing method with a high dye-uptake of disperse dyes, the specific process is basically the same as in Example 1. The only difference is that disperse yellow 163 is replaced with disperse orange 44 (filter cake, purchased from Zhejiang Runtu Co., Ltd.).

After testing, the dye-uptake of disperse orange 44 is 93.85%, and the carbon dioxide recovery rate is 100%.

The comparison method is basically the same as the above method. The only difference is that benzoic acid is not added to the dye kettle. After the dyeing is completed, open the lids of the dye kettle and the dyeing kettle, and take out the cheese yarn. The dye-uptake of disperse orange 44 is 35.32 %.

### Example 15

A supercritical carbon dioxide fluid dyeing method with a high dye-uptake of disperse dyes, the specific process is basically the same as in Example 1. The only difference is that disperse yellow 163 is replaced with disperse orange 30:2 (filter cake, purchased from Zhejiang Runtu Co., Ltd.).

After testing, it is found that the dye-uptake of disperse orange 30:2 is 92.55%, and the carbon dioxide recovery rate is 100%.

The comparison method is basically the same as the above method. The only difference is that benzoic acid is not added to the dye kettle. After the dyeing is completed, open the lids of the dye kettle and the dyeing kettle, and take out the cheese yarn. The dye-uptake of disperse orange 30:2 is 39.87 %.

### Example 16

A supercritical carbon dioxide fluid dyeing method with a high dye-uptake of disperse dyes, the specific process is basically the same as in Example 1. The only difference is that disperse yellow 163 is replaced with disperse red 19 (filter cake, purchased from Liaoning Dalian Dyestuffs factory).

After testing, the dye-uptake of disperse red 19 is 93.89%, and the carbon dioxide recovery rate is 100%.

The comparison method is basically the same as the above method. The only difference is that benzoic acid is not added to the dye kettle. After the dyeing is completed, open the lids of the dye kettle and the dyeing kettle, and take out the cheese yarn. The dye-uptake of disperse red 19 is 42.10 %.

### Example 17

A supercritical carbon dioxide fluid dyeing method with a high dye-uptake of disperse dyes, the specific process is basically the same as that in Example 1. The only difference is that disperse yellow 163 is replaced by disperse blue 104 (filter cake, purchased from Zhejiang Runtu Co., Ltd.).

After testing , the dye-uptake of disperse blue 104 is 92.77%, and the carbon dioxide recovery rate is 100%.

The comparison method is basically the same as the above method. The only difference is that benzoic acid is not added to the dye kettle. After the dyeing is completed, open the lids of the dye kettle and the dyeing kettle, and take out the cheese yarn. The dye-uptake of disperse blue 104 is 35.15 %.

### Example 18

A supercritical carbon dioxide fluid dyeing method with a high dye-uptake of disperse dyes, the specific process is basically the same as in Example 1. The only difference is that disperse yellow 163 is replaced by disperse violet 26 (filter cake, purchased from Zhejiang Runtu Co., Ltd.).

After testing , the dye-uptake of disperse violet 26 is 92.18%, and the carbon dioxide recovery rate is 100%.

The comparison method is basically the same as the above method. The only difference is that benzoic acid is not added to the dye kettle. After the dyeing is completed, open the lids of the dye kettle and the dyeing kettle, and take out the cheese yarn. The dye-uptake of disperse purple 26 is 39.78 %.

### Example 19

A supercritical carbon dioxide fluid dyeing method with a high dye-uptake of disperse dyes, the specific process is basically the same as in Example 1, except that benzoic acid is replaced by methyl para-aminobenzoate.

After testing, the dye-uptake of disperse yellow 163 is 91.59%.

Methyl para-aminobenzoate is not added to the dye kettle. After the dyeing is completed, open the lids of the dye kettle and the dyeing kettle, and take out the cheese yarn. The dye-uptake of disperse yellow 163 is 33.67%.

### Example 20

A supercritical carbon dioxide fluid dyeing method with a high dye-uptake of disperse dyes, the specific process is basically the same as Example 1, except that benzoic acid is replaced by methyl parahydroxybenzoate.

After testing, the dye-uptake of disperse yellow 163 is 92.67%.

Methyl paraben is not added to the dye kettle. After the dyeing is completed, open the lids of the dye kettle and the dyeing kettle, and take out the cheese yarn. The dye-uptake of disperse yellow 163 is 33.67%.

### Example 21

A supercritical carbon dioxide fluid dyeing method with a high dye-uptake of disperse dyes, the specific process is basically the same as that in Example 1, except that benzoic acid is replaced by L-tyrosine methyl ester.

After testing, the dye-uptake of disperse yellow 163 is 92.23%.

L-tyrosine methyl ester is not added to the dye kettle. After the dyeing is completed, open the lids of the dye kettle and the dyeing kettle, and take out the cheese yarn. The dye-uptake of disperse yellow 163 is 33.67%.

### Example 22

A supercritical carbon dioxide fluid dyeing method with a high dye-uptake of disperse dyes, the specific process is basically the same as that in Example 1, except that benzoic acid is replaced by L-tryptophan methyl ester.

After testing, the dye-uptake of disperse yellow 163 is 93.30%.

L-tryptophan methyl ester is not added to the dye kettle. After the dyeing is completed, open the lids of the dye kettle and the dyeing kettle, and take out the cheese yarn. The dye-uptake of disperse yellow 163 is 33.67 %.

### Example 23

A supercritical carbon dioxide fluid dyeing method with a high dye-uptake of disperse dyes, uses supercritical carbon dioxide water-free dyeing equipment for dyeing. The specific steps are as follows:
(1) preparing disperse yellow 163 (filter cake, purchased from Zhejiang Runtu Co., Ltd.), benzoic acid, and nicotinamide into powders that are evenly dispersed and have no obvious large particles;
(2) weighing the powdered disperse yellow 163, benzoic acid and nicotinamide at a molar ratio of 1:1:2, and dry grinding the weighed disperse yellow 163, benzoic acid and nicotinamide, the dry grinding method uses oxidation, and the addition amount of zirconium beads is 10 times the total mass of disperse yellow 163, benzoic acid, and nicotinamide. The ball milling speed is 200 r/min, the powder with a fineness of s00 mesh is obtained after grinding, and the powder is composed of disperse yellow 163, benzoic acid and nicotinamide;
(3) weighing a certain amount of the powder prepared in step (2) and placing it in the dye kettle, and placing the 75D/48F cheese yarn (the yarn is made of polyester fiber) into the dye kettle, and closing the lids of the dye kettle and the dyeing kettle; wherein the ratio of the mass of the polyester fiber on the cheese to the mass of the dye in the mixture prepared in step (2) is 100:1;
(4) opening the valves of the booster pump and carbon dioxide storage tank, introducing carbon dioxide liquid into the dye kettle, and opening the circulation pump, setting the carbon dioxide circulation rate to 30 seconds/time, and at the same time, monitoring the dyeing system formed by the entire supercritical carbon dioxide anhydrous dyeing equipment, the heating rate is 1 °C/min; using a flow meter to determine the amount of carbon dioxide liquid introduced, when the ratio of the volume of carbon dioxide liquid to the mass of yarn on the cheese yarn reaches 1 L:60g, closing the valve of the carbon dioxide storage tank and the booster pump; continuing to heat up the dye kettle and dyeing kettle to 130 °C at a heating rate of 1°C/min, and controlling the pressure of the dye kettle and dyeing kettle to be 27 MPa; under the conditions of 130 °C and 27 MPa, the carbon dioxide is supercritical fluid state, and keep the circulation rate of the supercritical carbon dioxide fluid at 30 seconds/time and perform supercritical carbon dioxide anhydrous dyeing for 2 hours, and the dyeing is completed.

After dyeing, the supercritical carbon dioxide fluid flows through the low-pressure zone of the separation kettle with a temperature of 30-50 °C and a pressure of 5-6 MPa and becomes gas, disperse yellow 163, benzoic acid and nicotinamide are precipitated, and the pure carbon dioxide gas is then treated at low temperature and turned into a liquid back into the storage tank, and the carbon dioxide recovery rate is 100%.

Open the lid of the dye kettle and the dyeing kettle, take out the cheese yarn, and measure the inner, middle and outer yarns of the package (i.e. cheese yarn) according to GB/T 9337-2009 "Method For Determination of High-temperature Dye-uptake of Disperse Dyes". The dye uptake amount is averaged to calculate the dye-uptake. The dye-uptake of disperse yellow 163 is 92.13%.

The comparison method is basically the same as the above method, and the only difference is that benzoic acid and nicotinamide are not added to the dye kettle. After the dyeing is completed, open the lids of the dye kettle and the dyeing kettle, and take out the cheese yarn. The dye-uptake of disperse yellow 163 is 33.67%.

### Example 24

A supercritical carbon dioxide fluid dyeing method with a high dye-uptake of disperse dyes, the specific process is basically the same as that in Example 23. The only difference is that benzoic acid is replaced with methyl para-aminobenzoate, and nicotinamide is replaced with para-aminobenzoate and methyl hydroxybenzoate.

After testing, the dye-uptake of disperse yellow 163 is 92.56%, and the carbon dioxide recovery rate is 100%.

The comparison method is basically the same as the above method. The only difference is that methyl para-aminobenzoate and methyl parahydroxybenzoate are not added to the dye kettle. After the dyeing is completed, open the lids of the dye kettle and the dyeing kettle, and take out the cheese yarn. The dye-uptake of disperse yellow 163 is 33.67%.

### Example 25

A supercritical carbon dioxide fluid dyeing method with a high dye-uptake of disperse dyes, the specific process is basically the same as Example 23. The only difference is that benzoic acid is replaced by L-tyrosine methyl ester, and nicotinamide is replaced by L-tryptophan methyl ester.

After testing, the dye-uptake of disperse yellow 163 is 93.87%, and the carbon dioxide recovery rate is 100%.

The comparison method is basically the same as the above method. The only difference is that methyl para-aminobenzoate and methyl parahydroxybenzoate are not added to the dye kettle. After the dyeing is completed, open the lids of the dye kettle and the dyeing kettle, and take out the cheese yarn. The dye-uptake of disperse yellow 163 is 33.67%.

## Claims

1. A supercritical carbon dioxide fluid dyeing method with a high dye-uptake of disperse dyes, when using a disperse dye to dye a polyester fiber or products thereof, adding a co-solvent capable of increasing a dissolution rate and a solubility of the disperse dye in a supercritical carbon dioxide fluid into a dyeing system, comprising:
wherein the solubility of the co-solvent in the supercritical carbon dioxide fluid is higher than that of the disperse dye, and in the dyeing system, an intermolecular interaction between each substance meets the requirement of: the intermolecular interaction between the co-solvent and the supercritical carbon dioxide fluid > the intermolecular interaction between the co-solvent and the disperse dye > the intermolecular interaction between the supercritical carbon dioxide fluid and the disperse dye;
wherein the co-solvent is solid at a separation temperature of 30-50 °C and a separation pressure of 5-6 MPa; the separation temperature is a temperature when a supercritical carbon dioxide gasification is achieved and dissolved dyes and co-solvents are precipitated; the separation pressure is a pressure when a supercritical carbon dioxide gasification is achieved and dissolved dyes and co-solvents are precipitated;
wherein the high dye-uptake of disperse dyes means that the dye-uptake of disperse dyes is 90.18% - 99.97%;
wherein the supercritical carbon dioxide fluid dyeing method with a high dye-uptake of disperse dyes has an increase in dye-uptake of 123% - 194.7% compared to the comparative method, and comparing the comparison method and the supercritical carbon dioxide fluid dyeing method with high dye-uptake of disperse dyes, the only difference is that it does not use the co-solvent.

2. The method of claim 1, comprising that, in the dyeing system, a binding force between the disperse dye and the polyester fiber or products thereof is greater than a binding force between the disperse dye and other substances, a binding force between the co-solvent and the supercritical carbon dioxide fluid is greater than a binding force between the co-solvent and other substances.

3. The method of claim 2, wherein the co-solvent is more than one selected from the group consisting of benzoic acid, nicotinamide, methyl para-aminobenzoate, methyl para-hydroxybenzoate, methyl L-complexinate and methyl L-tryptophan; (1) wherein the disperse dye is disperse yellow 163, disperse blue 60, disperse orange 44, disperse orange 30:2, disperse red 19, disperse blue 104 or disperse violet 26.

4. The method of claim 1, comprising specific steps as follows:
making disperse dyes and co-solvents into powders respectively;
blending a powdered disperse dye and co-solvent in a certain molar ratio to obtain a mixture;
placing a ground mixture in a dye kettle, and at the same time placing the polyester fiber or products thereof in the dye kettle, passing in the carbon dioxide liquid, adjusting the temperature and pressure in the dye kettle for a high-temperature and high-pressure dyeing, and taking out the polyester fiber or products thereof after the dyeing is completed.

5. The method of claim 4, comprising that, in step (1), the molar ratio of disperse dyes and co-solvents is 1:(1-10).

6. The method of claim 4, comprising that, in step (2), the blending is using a method of evaporation crystallization, dry grinding, wet grinding, hot melt extrusion or melt crystallization.

7. The method of claim 4, comprising that, in step (3), the high-temperature and high-pressure dyeing is at a temperature of 100-150 °C and a pressure of 16-30 MPa.
